# EUROPÄISCHE PATENTSCHRIFT

(11) **EP 2 483 118 B1**
(45) Veröffentlichungstag und Bekanntmachung des Hinweises auf die Patenterteilung: **28.10.2015**
(21) Anmeldenummer: 10771353.9
(22) Anmeldetag: 24.08.2010
(51) Int. Cl.: B60T 15/38, F16D 51/24, F16D 53/00, F16D 55/10, F16D 65/14, F16D 65/38

(54) **LUFTSPIELEINSTELLUNG BEI EINEM HYDRAULISCHEN BREMSSYSTEM**
PLAY ADJUSTMENT IN A HYDRAULIC BRAKING SYSTEM
RÉGLAGE DE JEU DANS UN SYSTÈME DE FREINAGE HYDRAULIQUE

(30) Priorität: 29.09.2009 DE 102009048667
(43) Veröffentlichungstag der Anmeldung: 08.08.2012
(73) Patentinhaber: Siemens Aktiengesellschaft, 80333 München (DE)
(72) Erfinder: LIERMANN, Matthias, 52066 Aachen (DE); STAMMEN, Christian, 41564 Kaarst (DE)
(86) Internationale Anmeldenummer: PCT/EP2010/062290
(87) Internationale Veröffentlichungsnummer: WO 2011/038998

(56) Entgegenhaltungen:
- EP-A2- 1 932 737
- WO-A1-2006/032447
- WO-A2-2009/083216
- DE-A1- 10 138 452
- US-A- 3 955 370
- US-A- 4 319 671
- US-A- 4 867 281

## Beschreibung

Die Erfindung betrifft ein hydraulisches Bremssystem zum Abbremsen einer sich bewegenden Masse mit einem Anpressteil zum Anpressen an eine Bremsfläche unter Reibschluss, einem mit Hydraulikflüssigkeit befüllten Bremsaktuator zum Erzeugen einer in das Anpressteil einleitbaren Andruckkraft, der einen Bremszylinder (9) aufweist, in dem sich ein längsbeweglich geführter Bremskolben (10) hinein erstreckt, wobei der Bremskolben (10) und der Bremszylinder (9) wenigstens eine Bremskammer (12) begrenzen, und Abstandsmitteln zum Einstellen eines Luftspiels zwischen dem Anpressteil und der Bremsfläche, wenn das Bremssystem in einer gelösten Stellung ist.

Die Erfindung betrifft ferner ein Verfahren zum Einstellen eines Luftspiels zwischen einem Anpressteil einer hydraulischen Bremse und einer Bremsfläche, bei dem ein mit Hydraulikflüssigkeit befüllter Bremsaktuator zum Anpressen des Anpressteils an die Bremsfläche unter Reibschluss eine in das Anpressteil einleitbare Andruckkraft erzeugt, wobei der Bremsaktuator einen Bremszylinder aufweist, in dem sich ein längsbeweglich geführter Bremskolben derart hinein erstreckt, dass der Bremskolben und der Bremszylinder eine Bremskammer begrenzen.

Ein solches hydraulisches Bremssystem und ein solches Verfahren sind aus dem landläufigen Stand der Technik bereits bekannt. Zum Lösen einer Reibbremse müssen die Bremsbeläge oder andere Reibelemente, die hier zusammen mit dem Begriff "Anpressteil" bezeichnet sind, von der Bremsfläche abgehoben werden. Hierbei muss der zum Abheben dienende Rückhub einer Betätigungseinrichtung durch einen Anschlag begrenzt werden, damit der Bremsbelag beim Lösen der Bremse nicht zu weit von der Bremsfläche entfernt wird. Zur Begrenzung des Hubes gibt es, je nachdem ob das Bremssystem aktiv oder passiv ausgeführt ist, unterschiedliche mechanische Lösungen.

So sind beispielsweise aus der Druckschrift US 4 867 281 A ein gattungsgemäßes hydraulisches Bremssystem und ein gattungsgemäßes Verfahren zum Einstellen eines Luftspieles bekannt, wobei die Abstandsmittel eine mit der Bremskammer hydraulisch verbundene Kammer zum Abspeichern eines vordefinierten Volumens an Hydraulikflüssigkeit bei einem Mindestdruck aufweisen.

Ferner ist aus der Druckschrift US 4 319 671 A ein hydropneumatisches Bremssystem und ein Verfahren zum Einstellen eines Lüftspiels bekannt, bei dem Abstandsmittel ebenfalls eine mit der Bremskammer hydraulisch verbundene Kammer zum Abspeichern eines vordefinierten Volumens an Hydraulikflüssigkeit bei einem Mindestdruck aufweisen.

Aufgabe der Erfindung ist es, ein hydraulisches Bremssystem der eingangs genannten Art bereitzustellen, das kostengünstig, leicht und zuverlässig ist.

Die Erfindung löst diese Aufgabe ausgehend von einem Bremssystem mit den Merkmalen des Oberbegriffes des Patentanspruches 1 (US 4 867 281 A), bei dem die Abstandsmittel einen Hydraulikspeicher zum Abspeichern eines vordefinierten Volumens an Hydraulikflüssigkeit bei einem Mindestdruck aufweisen, dadurch, dass der Bremskolben und der Bremszylinder eine Bremsrückholkammer begrenzen, und dass zum Abheben des Anpressteils von der Bremsfläche die Bremsrückholkammer des Bremsaktuators mit dem Hydraulikspeicher verbindbar ist, wobei das Volumen der Hydraulikflüssigkeit des Hydraulikspeichers den Abstand des Anpressteils von der Bremsfläche in der gelösten Stellung des Bremssystems bestimmt, so dass mechanische Anschlags- oder Arretierungsmittel vermieden sind.

Ausgehend von einem Verfahren mit den Merkmalen des Oberbegriffes des Patentanspruches 7 (US 4 867 281 A), bei dem zum Abheben des Anpressteils von der Bremsfläche ein in einem Hydraulikspeicher abgespeichertes vordefiniertes Volumen einer Hydraulikflüssigkeit, die mit einem vordefinierten Druck beaufschlagt ist, zum Erzeugen einer Bewegung des Anpressteils verwendet wird, löst die Erfindung die Aufgabe dadurch, dass eine von dem Bremskolben und dem Bremszylinder begrenzte Bremsrückholkammer des Bremssaktuators mit dem Hydraulikspeicher verbunden wird so dass vordefinierte Volumen an Hydraulikflüssigkeit in die Bremsrückholkammer des Bremssaktuators eingeleitet wird, wobei der beweglich geführte Bremskolben bewegt wird und wobei allein das hierzu eingesetzte Volumen an Hydraulikflüssigkeit die Bewegung des Anpressteils begrenzt und somit den Abstand zwischen dem Anpressteil und der Bremsfläche in einer gelösten Stellung der Bremse bestimmt.

Erfindungsgemäß wird das Luftspiel zwischen dem Anpressteil und einer Bremsfläche, also mit anderen Worten der Abstand zwischen Anpressteil und Bremsfläche, nicht etwa mit Hilfe von mechanischen Anschlägen oder Arretierungsmitteln eingestellt. Erfindungsgemäß wird ein begrenztes Volumen an Hydraulikflüssigkeit eingesetzt, das eine ebenfalls begrenzte Bewegung des Anpressteils verursacht. Dabei ist zum Abheben des Anpressteils von der Bremsfläche die Bremsrückholkammer des Bremsaktuators mit dem Hydraulikspeicher verbindbar, wobei das Volumen der Hydraulikflüssigkeit des Hydraulikspeichers den Abstand des Anpressteils von der Bremsfläche in der gelösten Stellung des Bremssystems bestimmt. Der Hydraulikspeicher wirkt also mit der Bremsrückholkammer des Bremsaktuators zusammen, wobei deren Zusammenwirken über zweckmäßige hydraulische Schaltmittel gesteuert oder eingestellt werden kann. Das Anpressteil ist beispielsweise ein Bremsbelag, ein Bremsklotz oder ein anderes Reibelement, wobei die Bremsfläche beispielsweise an einer Bremsscheibe ausgebildet ist, die drehfest mit einer Achse eines Schienenfahrzeugs verbunden ist. Abweichend davon ist es jedoch auch möglich, dass die Bremsfläche die Oberfläche einer Schiene, eines Rades oder dergleichen ist. Das Bremssystem kann grundsätzlich ein aktives oder auch ein passives Bremssystem sein. Bei aktiven hydraulischen Bremssystemen wird in Folge eines aufgebauten Hydraulikdruckes das Anpressteil unter Reibschluss auf die Bremsfläche gepresst, so dass sich aufgrund der Reibwirkung zwischen den Reibpartnern eine Bremsverzögerung einstellt. Zum Lösen dieses Reibschlusses wird im Rahmen der Erfindung ein vordefiniertes Volumen einer Hydraulikflüssigkeit bei einem vorgeschriebenen Druck oder Druckbereich eingesetzt. Dabei bestimmt das Volumen der Hydraulikflüssigkeit den Rückhub des Anpressteils von der Bremsfläche, also den Abstand der beiden Reibpartner in einer gelösten Stellung des Bremssystems. Das zum Lösen notwendige Volumen wird vor und/oder während des Bremsvorgangs gespeichert. Die Speicherung erfolgt zweckmäßigerweise in dem Hydraulikspeicher. Der Hydraulikspeicher ist beispielsweise eine Hydraulikkammer eines Hydraulikzylinders, in den sich ein Hydraulikkolben beweglich hinein erstreckt, wobei der Hydraulikkolben zusammen mit dem Hydraulikzylinder den Hydraulikspeicher dichtend begrenzt. Der Hydraulikkolben prägt der Hydraulikflüssigkeit den gewünschten vordefinierten Mindestdruck auf, der beispielsweise durch das Spannen einer außerhalb der Hydraulikkammer angeordneten Feder erzeugt wird, die sich an dem Hydraulikkolben einerseits und an dem Hydraulikzylinder andererseits abstützt. Mit der erfindungsgemäßen Einstellung des Spiels zwischen Anpressteil und Bremsfläche ist eine aufwändige mechanische Begrenzung überflüssig geworden. Dies bedeutet auf der anderen Seite, dass das erfindungsgemäße hydraulische Bremssystem sehr leicht und kostengünstig ist. Darüber hinaus ist das erfindungsgemäße hydraulische Bremssystem zuverlässiger und weist eine höhere Verfügbarkeit auf, da anders als bei mechanischen Komponenten keine Ermüdungserscheinung oder sonstige Alterungsprozesse auftreten können.

Vorteilhafterweise ist eine Druckfeder zum Anpressen des Anpressteils an die Bremsfläche vorgesehen. Gemäß dieser vorteilhaften Weiterentwicklung ist ein passives Bremssystem bereitgestellt. Das passive Bremssystem weist eine Feder auf, die bei fehlendem Hydraulikdruck im Bremsaktuator das Anpressteil gegen die Bremsfläche presst und somit einen Reibschluss herbeiführt. Aufgrund des Reibschlusses kommt es zum Bremsen der bewegten Masse. Ein Hydraulikdruck ist zum Lösen des Anpressteils von der Bremsfläche erforderlich. Die zum Abheben notwendige Hydraulikflüssigkeit wird von dem Hydraulikspeicher bereitgestellt.

Zweckmäßigerweise ist der Bremszylinder ein Differentialzylinder. Bei Differentialzylindern ist die fest mit dem Bremskolben verbundene Kolbenstange nur an einer Seite des Bremskolbens ausgebildet. Aus diesem Grunde sind zwei unterschiedlich große Wirkflächen bereitgestellt, da auf der Stangenseite lediglich die Ringfläche eine Wirkung entfaltet, auf der von der Stange abgewandten Seite des Kolbens jedoch die gesamte Kolbenfläche wirkt. Ist der Druck daher auf beiden Seiten des Kolbens gleich groß, kommt es zu einer Verschiebung des Kolbens in Richtung der Stangenseite. Dies ist beispielsweise aus Sicherheitsgründen vorteilhaft, da beispielsweise bei Ausfall eines Hydrauliksystems der Kolben des Differentialzylinders immer zu einer Seite hin verschoben wird. Dies kann ausreichend sein, um eine gewünschte Bremswirkung im Notfall bereitzustellen.

Zweckmäßigerweise ist der Bremsaktuator mittels eines Regelventils mit einer Hochdruckleitung und/oder mit einer Niederdruckleitung verbunden, wobei die Hochdruckleitung und die Niederdruckleitung jeweils mit einer hydraulischen Flüssigkeit befüllt sind und der Druck der hydraulischen Flüssigkeit in der Hochdruckleitung größer ist als der Druck der hydraulischen Flüssigkeit in der Niederdruckleitung. Das Regelventil legt fest, welcher Druck auf welcher Seite des Differentialzylinders herrscht.

Der Hydraulikspeicher ist zweckmäßigerweise mit der Hochdruckleitung verbunden.

Gemäß einer bevorzugten Ausgestaltung der Erfindung ist das Anpressteil über Verbindungsmittel an einem mit einem Gestell der zu bremsenden Masse befestigbaren Druckerzeuger abgestützt, der ein mit Hydraulikflüssigkeit befüllten Abstützzylinder und einen mit diesem zusammenwirkenden Abstützkolben aufweist, wobei der Abstützzylinder über Hydraulikleitungen mit dem Bremsaktuator kommuniziert. Gemäß dieser vorteilhaften Weiterentwicklung ist eine selbstverstärkende hydraulische Bremse bereitgestellt. Hierbei ist zunächst nur eine kleine Anfangskraft in das Anpressteil einzuleiten, welche den Reibschluss zwischen Anpressteil und Bremsfläche herstellt. Das Anpressteil ist über eine zweckmäßige Mechanik nicht etwa an einem Gestell der zu bremsenden Masse, sondern an einer Hydrauliksäule abgestützt, die sich in einem Abstützzylinder befindet. In den Abstützzylinder ragt ein Abstützkolben, der mit dem Anpressteil beispielsweise mittels über eine zweckmäßige Hebelmechanik verbunden ist. Das Anpressteil ist Teil einer Zuspanneinrichtung oder mit anderen Worten eines Bremssattels, der nicht wie im Stand der Technik üblich an einem Gestell der zu bremsenden Masse befestigt ist. Vielmehr wird das Bremsteil oder der Bremssattel beweglich gelagert. Daher wird aufgrund der Bewegung der zu bremsenden Masse bei einem Reibschluss eine Kraft in den Bremssattel eingeleitet, die über eine zweckmäßige Hebelmechanik in den Abstützkolben eingeleitet wird. Dieser komprimiert die Hydrauliksäule des Abstützzylinders, so dass aufgrund der Verbindung zwischen Abstützzylinder und Bremszylinder der Druck in dem Bremsaktuator verstärkt wird.

Weitere Ausführungsbeispiele und Vorteile der Erfindung sind Gegenstand der nachfolgenden Beschreibung eines Ausführungsbeispiels des erfindungsgemäßen hydraulischen Bremssystems unter Bezug auf die beigeschlossene
Figur, die ein Ausführungsbeispiel des erfindungsgemäßen Bremssystems schematisch verdeutlicht.

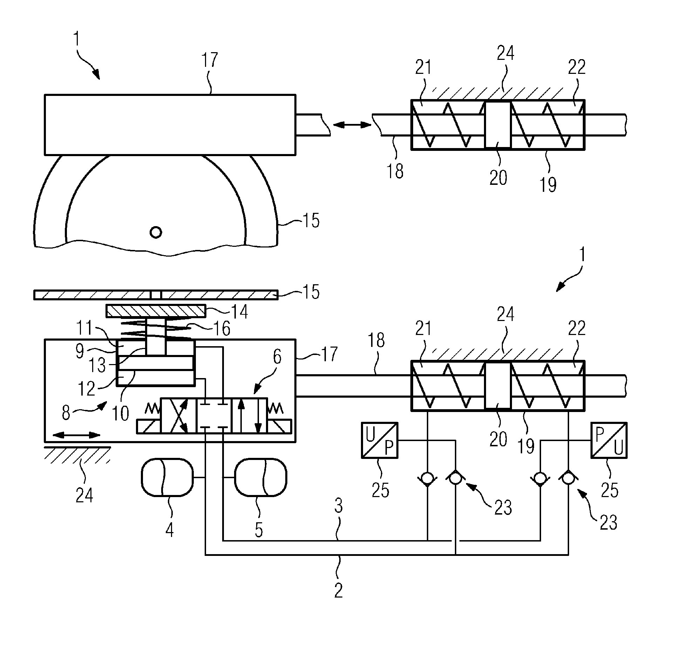

Die Figur zeigt ein Ausführungsbeispiel des erfindungsgemäßen Bremssystems 1 in einer schematischen Darstellung, wobei im unteren Teil der Figur die Vorrichtung 1 in einer teilweise geschnittenen Draufsicht und im oberen Teil der Figur das Bremssystem 1 in einem teilweise geschnittenen Seitenansicht gezeigt ist. Es ist erkennbar, dass das hydraulische Bremssystem 1 einen Hochdruckkreis 2 und einen Niederdruckkreis 3 aufweist, die jeweils mit einem Hydraulikspeicher 4 sowie mit einem Niederdruckbehälter 5 verbunden sind. Der Hochdruckkreis 2 und der Niederdruckkreis 3 sind über ein analoges Regelventil 6, das als Bremsventil dient, mit einem Bremsaktuator 8 verbunden, der über einen Bremszylinder 9 und ein Anpressteil 14 verfügt. Der Bremszylinder 9 ist durch einen Bremskolben 10 in eine Bremskammer 12 sowie eine Bremsrückholkammer 11 unterteilt. Vom Bremskolben 10 erstreckt sich eine Kopplungsstange 13 zu dem Anpressteil 14, das zum Andrücken an eine Bremsscheibe 15 vorgesehen ist. Die Bremsscheibe 15 ist beispielsweise drehfest mit der Achse des Schienenfahrzeugs verbunden. Zwischen dem Bremszylinder 9 und dem Anpressteil 14 ist ferner eine vorgespannte Druckfeder 16 vorgesehen, welche sich einerseits an dem Anpressteil und andererseits am Bremszylinder 9 abstützt. Es ist erkennbar, dass der Bremszylinder 9 als Differentialzylinder ausgestaltet ist. Mit anderen Worten ist die Kopplungsstange 13 nur an einer Seite des Bremskolbens 10 angeordnet, so dass unterschiedliche große Wirkflächen an dem Bremskolben 10 ausgebildet sind. Die von der Kolbenstange abgewandte Seite des Bremskolbens 10 weist eine größere Wirkfläche auf, da auf der Kolbenstangenseite lediglich die Ringfläche mit dem Druck der Hydraulikflüssigkeit beaufschlagbar ist. Auch aus diesem Grunde kommt es bei Druckgleichheit auf beiden Seiten zu einem Reibschluss zwischen dem Anpressteil 14 und der Bremsfläche 15. Die dabei in das Anpressteil 14 eingeleitete Bremskraft wird von der Druckfeder 16 unterstützt.

Der Bremsaktuator 8 ist mit seinem Bremszylinder 9, dem Anpressteil 14, der Druckfeder 16 und der Kopplungsstange 13 zusammen mit dem Regelventil 6 Teil einer Zuspanneinrichtung 17, die - wie durch den Doppelpfeil angedeutet - nicht fest, sondern beweglich in einem Gestell 24 eines Schienenfahrzeugs gelagert ist. Dabei ist die Zuspanneinrichtung 17 über Verbindungsmittel 18 an einem mit Hydraulikflüssigkeit befüllten Abstützzylinder 19 abgestützt, der fest mit dem Gestell 24 des abzubremsenden Schienenfahrzeugs verbunden ist. Dazu sind die Verbindungsmittel 18 mit einem in den Abstützzylinder 19 ragenden Abstützkolben 20 verbunden. Der Abstützzylinder 19 ist ein so genannter Gleichganzzylinder ausgebildet, die Wirkflächen des Abstützkolbens 20 sind auf beiden Seiten gleich. Der Abstützkolben 20 unterteilt den Abstützzylinder 19 in eine Abstützkammer 21 sowie in eine Ausgangskammer 22. Die Abstützkammer 21 und die Ausgangskammer 22 sind über Hydraulikleitungen mit dem Niederkreis 3 beziehungsweise dem Hochdruckkreis 2 verbunden. Zum Überwachen des Hydraulikdruckes sind Messsensoren 25 vorgesehen, die eingangsseitig mit dem Hydraulikdruck P beaufschlagt sind und ausgangsseitig eine dem Hydraulikdruck P entsprechende Spannung U bereitstellen.

Die Wirkung des erfindungsgemäßen hydraulischen Bremssystems ist wie folgt: Zum Einleiten eines Bremsvorgangs wird beispielsweise ein Druckausgleich zwischen der Bremskammer 12 und der Bremsrückholkammer 11 herbeigeführt. Aufgrund der Feder 16 und den unterschiedlich großen Wirkflächen des Bremskolbens 10 kommt es zum Verschieben des Anpressteils 14 gegen die Bremsfläche 15 unter Reibschluss. Die Bremsfläche 15 rotiert bei einer Fahrt des Schienenfahrzeugs, so dass in das Anpressteil 14 und somit die gesamte Zuspannrichtung 17 aufgrund des Reibschlusses zwischen Anpressteil 14 und Bremsfläche 15 eine Kraft eingeleitet wird. Diese Kraft wirkt auf die Hydrauliksäule in der Ausgang 22. In der Ausgangskammer 22 steigt der Druck der Hydraulikflüssigkeit an. Ist der Druck in der Ausgangskammer 22 größer als der Druck im Hochdruckkreis 2, öffnet sich ein Rückschlagventil 23, wobei der Hydraulikdruck in dem Bremsaktuator 8 und somit die Kraft der das Anpressteil gegen die Bremsfläche gedrückt wird, erhöht wird. Da das Schienenfahrzeug in zwei Richtung fahren kann, gilt entsprechendes für die Abstützkammer 21. Gleichzeitig wird während des Bremsvorgangs ein bestimmtes zusätzliches Volumen an Hydraulikflüssigkeit in dem Hydraulikspeicher 4 gespeichert. Das Gesamtvolumen an Hydraulikflüssigkeit des Hydraulikspeichers bestimmt den späteren Abstand des Anpressteils 14 von der Bremsfläche 15.

Zum Lösen der Bremse verbindet das Regelventil 6 den Hochdruckkreis 2 und somit den Hydraulikspeicher 4 mit der Bremsrückholkammer 11 des Bremsaktuators 8. Aufgrund des Druckes in dem Hydraulikspeicher 4 wird der Bremskolben 10 unter Vergrößerung des Volumens der Bremsrückholkammer 11 bewegt, wobei sich das Anpressteil 14 von der Bremsfläche 15 unter Ausbildung eines Spiels abhebt. Dieses Abheben geht soweit, bis das gesamte Volumen an Hydraulikflüssigkeit des Hydraulikspeichers 4 verbraucht ist. Mit anderen Worten legt das Volumen der in dem Hydraulikspeicher gespeicherten Hydraulikflüssigkeit den Rückwärtshub des Anpressteils 14 von der Bremsfläche 15 fest.

## Patentansprüche

1. Hydraulisches Bremssystem (1) zum Abbremsen einer sich bewegenden Masse mit
- einem Anpressteil (14) zum Anpressen an eine Bremsfläche (15) unter Reibschluss,
- einem mit Hydraulikflüssigkeit befüllten Bremsaktuator (8) zum Erzeugen einer in das Anpressteil (14) einleitbaren Andruckkraft, der einen Bremszylinder (9) aufweist, in dem sich ein längsbeweglich geführter Bremskolben (10) hinein erstreckt, wobei der Bremskolben (10) und der Bremszylinder (9) wenigstens eine Bremskammer (12) begrenzen, und
- Abstandsmitteln zum Einstellen eines Luftspiels zwischen dem Anpressteil (14) und der Bremsfläche (15), wenn das Bremssystem (1) in einer gelösten Stellung ist,
- wobei die Abstandsmittel einen Hydraulikspeicher (4) zum Abspeichern eines vordefinierten Volumens an Hydraulikflüssigkeit bei einem Mindestdruck aufweisen,
**dadurch gekennzeichnet,**
- **dass** der Bremskolben (10) und der Bremszylinder (9) eine Bremsrückholkammer (11) begrenzen, und dass
- zum Abheben des Anpressteils (14) von der Bremsfläche (15) die Bremsrückholkammer des Bremsaktuators (8) mit dem Hydraulikspeicher (4) verbindbar ist, wobei das Volumen der Hydraulikflüssigkeit des Hydraulikspeichers (4) den Abstand des Anpressteils (14) von der Bremsfläche (15) in der gelösten Stellung des Bremssystems (1) bestimmt, so dass mechanische Anschlags- oder Arretierungsmittel vermieden sind.

2. Hydraulisches Bremssystem (1) nach Anspruch 1,
**gekennzeichnet durch**
eine Druckfeder (16) zum Anpressen des Anpressteils (14) an die Bremsfläche.

3. Hydraulisches Bremssystem (1) nacheinem der vorhergehenden Ansprüche,
**dadurch gekennzeichnet, dass** der Bremszylinder (9) ein Differentialzylinder ist.

4. Hydraulisches Bremssystem (1) nach einem der vorhergehenden Ansprüche,
**dadurch gekennzeichnet, dass** der Bremsaktuator (8) mittels eines Regelventils (6) mit einer Hochdruckleitung (2) und/oder mit einer Niederdruckleitung (3) verbunden ist, wobei die Hochdruckleitung (2) und die Niederdruckleitung (3) jeweils mit einer hydraulischen Flüssigkeit befüllt sind und der Druck der hydraulischen Flüssigkeit in der Hochdruckleitung (2) größer ist als der Druck der hydraulischen Flüssigkeit in der Niederdruckleitung (3).

5. Hydraulisches Bremssystem (1) nach Anspruch 4,
**dadurch gekennzeichnet, dass** der Hydraulikspeicher (4) mit der Hochdruckleitung (2) verbunden ist.

6. Hydraulisches Bremssystem (1) nach einem der vorhergehenden Ansprüche,
**dadurch gekennzeichnet, dass** das Anpressteil (14) über Verbindungsmittel (18) an einem mit einem Gestell der zu bremsenden Masse befestigbaren Druckerzeuger (19,20) abgestützt ist, der ein mit Hydraulikflüssigkeit befüllten Abstützzylinder (19) und ein mit diesem zusammen wirkenden Abstützkolben (20) aufweist, wobei der Abstützzylinder (19) über Hydraulikleitungen (2,3) mit dem Bremsaktuator (8) kommuniziert.

7. Verfahren zum Einstellen des Luftspiels zwischen einem Anpressteil (14) einer hydraulischen Bremse und einer Bremsfläche (15),
bei dem ein mit Hydraulikflüssigkeit befüllter Bremsaktuator (8) zum Anpressen des Anpressteils (14) an die Bremsfläche (15) unter Reibschluss eine in das Anpressteil (14) einleitbare Andruckkraft erzeugt, wobei der Bremsaktuator einen Bremszylinder (9) aufweist, in dem sich ein längsbeweglich geführter Bremskolben (10) derart hinein erstreckt, dass der Bremskolben (10) und der Bremszylinder (9) eine Bremskammer (12) begrenzen, und
- bei dem zum Abheben des Anpressteils (14) von der Bremsfläche (15) ein in einem Hydraulikspeicher (4) abgespeichertes vordefiniertes Volumen einer Hydraulikflüssigkeit, die mit einem vordefinierten Druck beaufschlagt ist, zum Erzeugen einer Bewegung des Anpressteils verwendet wird,
**dadurch gekennzeichnet, dass** zum Abheben des Anpressteils (14) von der Bremsfläche (15) eine von dem Bremskolben (10) und dem Bremszylinder (9) begrenzte Bremsrückholkammer (11) des Bremssaktuators (8) mit dem Hydraulikspeicher (4) verbunden wird, so dass das vordefinierte Volumen an Hydraulikflüssigkeit in die Bremsrückholkammer (11) des Bremssaktuators (8) eingeleitet wird, wobei der beweglich geführte Bremskolben bewegt wird und wobei allein das Volumen an Hydraulikflüssigkeit die Bewegung begrenzt und somit den Abstand zwischen dem Anpressteil (14) und der Bremsfläche (15) in einer gelösten Stellung der Bremse bestimmt.

## Claims

1. Hydraulic braking system (1) for slowing down a moving mass, comprising
- a press part (14) for pressing against a brake surface (15) with frictional contact,
- a brake actuator (8) filled with hydraulic fluid for generating a pressure which can be introduced into the press part (14), which brake actuator (8) has a brake cylinder (9), in which a brake piston (10) extends which is guided so as to be movable in the longitudinal direction, wherein the brake piston (10) and the brake cylinder (9) delimit at least one brake chamber (12), and
- spacer means for adjusting play between the press part (14) and the brake surface (15) when the braking system (1) is in a released position,
- wherein the spacer means have a hydraulic accumulator (4) for accumulating a predefined volume of hydraulic fluid at a minimum pressure,
**characterized in that**
- the brake piston (10) and the brake cylinder (9) delimit a brake return chamber (11), and **in that**
- the brake return chamber of the brake actuator (8) is connectable to the hydraulic accumulator (4) to lift the press part (14) from the brake surface (15), wherein the volume of hydraulic fluid in the hydraulic accumulator (4) determines the distance of the press part (14) from the brake surface (15) in the released position of the braking system (1), in such a way that mechanical stopping or blocking means are avoided.

2. Hydraulic braking system (1) according to Claim 1, **characterized by** a compression spring (16) for pressing the press part (14) against the brake surface.

3. Hydraulic braking system (1) according to either of the preceding claims,
**characterized in that**
the brake cylinder (9) is a differential cylinder.

4. Hydraulic braking system (1) according to one of the preceding claims,
**characterized in that**
the brake actuator (8) is connected by means of a control valve (6) to a high-pressure line (2) and/or to a low-pressure line (3), wherein the high-pressure line (2) and the low-pressure line (3) are each filled with a hydraulic fluid, and the pressure of the hydraulic fluid in the high-pressure line (2) is greater than the pressure of the hydraulic fluid in the low-pressure line (3).

5. Hydraulic braking system (1) according to Claim 4,
**characterized in that**
the hydraulic accumulator (4) is connected to the high-pressure line (2).

6. Hydraulic braking system (1) according to one of the preceding claims,
**characterized in that**
the press part (14) is supported, by connection means (18), on a pressure generator (19, 20) which can be fixed to a frame of the mass to be slowed down, said pressure generator having a support cylinder (19) filled with hydraulic fluid and a support piston (20) cooperating therewith, wherein the support cylinder (19) communicates with the brake actuator (8) via hydraulic lines (2, 3).

7. Method for adjusting play between a press part (14) of a hydraulic brake and a brake surface (15),
in which method a brake actuator (8) filled with hydraulic fluid for pressing the press part (14) against the brake surface (15) with frictional contact generates a pressure which can be introduced into the press part (14), the brake actuator having a brake cylinder (9), into which a brake piston (10) which is guided in a longitudinally movable manner extends in such a way that the brake piston (10) and the brake cylinder (9) delimit a brake chamber (12), and
- in which method a predefined volume, accumulated in a hydraulic accumulator (4), of a hydraulic fluid, to which a predefined pressure is applied, is used to generate a movement of the press part (14) so as to lift the press part from the brake surface (15),
**characterized in that**
a brake return chamber (11), delimited by the brake piston (10) and the brake cylinder (9), of the brake actuator (8) is connected to the hydraulic accumulator (4) to lift the press part (14) from the brake surface (15), with the result that the predefined volume of hydraulic fluid is introduced into the brake return chamber (11) of the brake actuator (8), wherein the movably guided brake piston is moved, and wherein merely the volume of hydraulic fluid delimits the movement and thus determines the distance between the press part (14) and the brake surface (15) in a released position of the brake.

## Revendications

1. Système (1) de frein hydraulique pour le freinage d'une masse en déplacement, comprenant
- une partie (14) de pression pour appliquer une pression à une surface (15) de frein avec frottement,
- un actionneur (8) de frein empli de liquide hydraulique pour produire une force de pression, qui peut être appliquée à la partie (14) de pression, l'actionneur ayant un cylindre (8) de frein dans lequel s'étend un piston (10) de frein guidé en déplacement longitudinal, le piston (10) de frein et le cylindre (9) de frein délimitant au moins une chambre (12) de frein et
- des moyens d'entretoisement pour régler un intervalle d'air entre la partie (14) de pression et la surface (15) de frein lorsque le système (1) de frein est dans un état desserré,
- dans lequel les moyens d'entretoisement ont un accumulateur (4) hydraulique pour accumuler un volume défini à l'avance de liquide hydraulique sous une pression minimum,
**caractérisé**
- **en ce que** le piston (10) de frein et le cylindre (9) de frein délimitent une chambre (11) de rappel de frein, et en ce que
- pour soulever la partie (14) de pression de la surface (15) de frein, la chambre de rappel de frein de l'actionneur (8) de frein peut communiquer avec l'accumulateur (4) hydraulique, le volume du liquide hydraulique de l'accumulateur (4) hydraulique déterminant la distance entre la partie (4) de pression et la surface (15) de frein en la position desserrée du système (1) de frein de manière à se dispenser de moyens mécaniques de butée ou d'arrêt.

2. Système (1) de frein hydraulique suivant la revendication 1,
**caractérisé par**
un ressort (16) de compression pour appliquer la partie (14) de pression à la surface de frein.

3. Système (1) de frein hydraulique suivant l'une des revendications précédentes,
**caractérisé en ce que**
le cylindre (9) de frein est un cylindre différentiel.

4. Système (1) de frein hydraulique suivant l'une des revendications précédentes,
**caractérisé en ce que**
l'actionneur (8) de frein communique au moyen d'une vanne (6) de régulation avec un conduit (2) de haute pression et/ou avec un conduit (3) de basse pression, le conduit (2) de haute pression et le conduit (3) de basse pression étant remplis respectivement d'un liquide hydraulique et la pression de liquide hydraulique dans le conduit (2) de haute pression est plus grande que la pression de liquide hydraulique dans le conduit (3) de basse pression.

5. Système (1) de frein hydraulique suivant la revendication 4,
**caractérisé en ce que**
l'accumulateur (4) hydraulique communique avec le conduit (2) de haute pression.

6. Système (1) de frein hydraulique suivant l'une des revendications précédentes,
**caractérisé en ce que**
la partie (14) de pression est appuyée par des moyens (18) de liaison sur un générateur (19, 20) de pression, qui peut être fixé à un bâti de la masse à freiner et qui a un cylindre (19) d'appui empli de liquide hydraulique et un piston (20) d'appui coopérant avec celui-ci, le cylindre (19) d'appui communiquant avec l'actionneur (8) de frein par des conduits (2, 3) hydrauliques.

7. Procédé de réglage de l'intervalle d'air entre une partie (14) de pression d'un frein hydraulique et une surface (15) de frein,
dans lequel un actionneur (8) de frein empli de liquide hydraulique produit, pour appliquer la pièce (14) de pression sur la surface (15) de frein avec frottement, une force d'application d'une pression pouvant être appliquée à la partie (14) de pression, l'actionneur de frein ayant un cylindre (9) de frein dans lequel un piston (10) de frein guidé en déplacement longitudinal s'étend de manière à ce que le piston (14) de frein et le cylindre (9) de frein délimitent une chambre (12) de frein et
- dans lequel, pour soulever la partie (14) de pression de la surface (15) de frein, on utilise, pour produire un déplacement de la partie de pression, un volume, défini à l'avance et emmagasiné dans un accumulateur (14) hydraulique, d'un liquide hydraulique qui est alimenté à une pression définie à l'avance,
**caractérisé en ce que**
pour soulever la partie (14) de pression de la surface (15) de frein, on met une chambre (11) de rappel de frein, délimitée par le piston (10) de frein et par le cylindre (9) de frein, de l'actionneur (8) de frein, en communication avec l'accumulateur (4) hydraulique de manière à envoyer le volume défini à l'avance de liquide hydraulique dans la chambre (11) de rappel de frein de l'actionneur (8) de frein, le piston de frein guidé en déplacement étant déplacé et seul le volume de liquide hydraulique limite le déplacement et détermine ainsi la distance entre la partie (14) de pression et la surface (15) de frein en une position desserrée du frein.
